Europäisches Patentamt

European Patent Office

Office européen des brevets

Veröffentlichungsnummer: **0 290 755**
**A1**

## EUROPÄISCHE PATENTANMELDUNG

Anmeldenummer: **88104436.6**

Anmeldetag: **19.03.88**

Int. Cl.⁴ **A01G 27/00**

Priorität: **13.04.87 DE 3712518**

Veröffentlichungstag der Anmeldung:
**17.11.88 Patentblatt 88/46**

Benannte Vertragsstaaten:
**AT BE CH DE ES FR GB GR IT LI LU NL SE**

Anmelder: **Reuss, Peter**
**Schlesienstrasse 10**
**D-8602 Memmelsdorf(DE)**

Anmelder: **Reuss, Rita**
**Schlesienstrasse 10**
**D-8602 Memmelsdorf(DE)**

Erfinder: **Reuss, Peter**
**Schlesienstrasse 10**
**D-8602 Memmelsdorf(DE)**
Erfinder: **Reuss, Rita**
**Schlesienstrasse 10**
**D-8602 Memmelsdorf(DE)**

Vertreter: **Göbel, Matthias, Dipl.-Ing.**
**Pruppacher Hauptstrasse 5-7**
**D-8501 Pyrbaum-Pruppach(DE)**

Anordnung zum Anfeuchten von Pflanzenerde.

Bei einer Anordnung zum Anfeuchten von Pflanzenerde in Töpfen ist zum einfachen und sicheren Zuführen von Wasser an die Pflanzenerde der Topf (2) in einem mindestens teilweise mit Wasser gefüllten Übertopf (1) frei einstellbar und ein eine Bodenöffnung (7) des Topfs (2) dicht durchgreifendes Rohrstück (8) vorgesehen, das an dem dem Topf (2) abgewandten Ende eine permanent offene Zuflußöffnung für Wasser und an dem im Topf (2) sich erstreckenden Ende eine angeformte Aufnahmeschale (9) für einen die Pflanzenerde (3) kontaktierenden Dosierkörper (10) für Wasser aufweist und mit einem zu einer Auflage für den Dosierkörper (19) in der Aufnahmeschale (9) verbreiterten gemeinsamen Kernkörper (11) aus einem Werkstoff mit Kapillareigenschaft ausgefüllt ist.

Fig.1

EP 0 290 755 A1

## Anordnung zum Anfeuchten von Pflanzenerde

Die Erfindung betrifft eine Anordnung zum Anfeuchten von Pflanzenerde in Töpfen.

Es ist bereits bekannt Pflanzenerde durch Zugießen von Wasser feucht zu halten. Zur Vereinfachung dieses Vorganges sind motorische Pumpeinrichtungen bekannt. Abgesehen davon, daß Pumpeinrichtungen einen großen baulichen Aufwand erfordern, ist auch die Dosierung der Wasserabgabe durch Pumpeinrichtungen schwierig und unsicher.

Es ist Aufgabe der Erfindung Maßnahmen zum einfachen und sicheren Anfeuchten von Pflanzenerde zu schaffen.

Der Erfindung gemäß ist hierzu vorgesehen, daß der Topf in einem mindestens teilweise mit Wasser gefüllten Übertopf frei einstellbar ist und ein eine Bodenöffnung des Topfes dicht durchgreifendes Rohrstück aufweist, das an dem dem Topf abgewandten Ende eine permanent offene Zufluößffnung für Wasser und an dem im Topf sich erstreckenden Ende eine angeformte Aufnahmeschale für einen die Pflanzenerde kontaktierenden Dosierkörper für Wasser aufweist und mit e.inem zu einer Auflage für den Dosierkörper in der Aufnahmeschale verbreiterten gemeinsamen Kernkörper aus einem Werkstoff mit Kapillar eigenschaft ausgefüllt ist.Der Topf ist dabei mittels am Boden desselben außen lösbar fest angeordneten Rohrstücken im Übertopf aufstellbar. Zur Anpassung der Stellhöhe des Topfs ist vorgesehen, daß die Rohrstücke axial im Abstand übereinander eine Anzahl vorbereitete Sollbruchstellen aufweisen und daß zu Längenänderungen der Rohrstücke an den Sollbruchstellen Rohrstückabschnitte abbrechbar sind. Es versteht sich, daß das die Bodenöffnung des Topfs durchgreifende Rohrstück ebenfalls im Abstand übereinander eine Anzahl vorbereitete Sollbruchstellen aufweist und daß zu Längenänderungen des Rohrstücks an den Sollbruchstellen Rohrstückabschnitte abbrechbar sind. Mittels der Anordnung erfolgt der Wasserübertritt aus dem Übertopf selbsttätig permanent dosiert und unabhängig vom jeweiligen Wasserstand im Übertopf durch Saugwirkung an die Pflanzenerde. In Ausgestaltung der Anordnung ist vorgesehen, daß das Rohrstück eine Bodenöffnung des Topfs mit seitlichem Spiel durchgreift und durch eine zwischen Aufnahmeschale und Topfboden angeordnete Haftschicht mit dem Topf fest und dicht verbunden ist. Als Haftschicht kann ein Dichtungsband in Anwendung kommen. Bevorzugt ist dasDichtungsband durch eine auf beiden Seiten eine vorbereitete Klebeschicht aufweisende Kunststoffolie oder durch ein geeignetes Papierformteil gebildet.

Schließlich sieht die Erfindung vor, daß die Aufnahmeschale durch einen sich auf dem Topfboden innen abstützenden Lüftungsrost umfaßt ist, der durch ein mit Pflanzenerde kontaktierendes Vlies übergriffen ist. Hierdurch ist zwischen Topfboden und Vlies vermittels des Lüftungsrostes eine Kammer gebildet, die mit einem sich bis über die Pflanzenerde erstreckendes Lüftungsrohr verbunden ist. In die Kammer kann überflüssiges Wasser abfließen, das dann über das Lüftungsrohr verdunstet. Durch die Belüftung der Kammer wird eine - schädliche Säuerung der Pflanzenerde vermieden. Das Lüftungsrohr kann wahlweise mit dem Topf einstückig ausgeführt sein. Zweckmäßig ist jedoch das Lüftungsrohr auf einem, z.B. mit Queröffnungen versehenen topffesten Ansatz lösbar aufgesteckt. Die Queröffnungen können dabei durch Bohrungen oder Schlitze gebildet sein. Außerdem ist vorgesehen, auf das freie Ende des Lüftungsrohres eine Queröffnungen aufweisende Lüftungspfeife anzuordnen, die ein unbeabsichtigtes Einfallen von Pflanzenerde in das Lüftungsrohr und weiter in die Kammer verhindert. Zusätzlich kann das freie Ende des Lüftungsrohres oder die Lüftungspfeife durch eine lösbar aufgesteckte Haube abdeckbar sein.

Der Lüftungsrost selbst kann beliebig, bevorzugt jedoch durch ein Gitter mit verschieden hohen Stegen gebildet sein. Durch die unterschiedlichen Stege sind Lüftungskanäle gebildet, die die Voraussetzung zu einer sicheren und behinderungsfreien Lüftung der Kammer geben. Es besteht auch die Möglichkeit den Lüftungsrost durch ein geeignetes Gewebe, insbesondere aus einem Kunststoff zu bilden. Das den Entlüftungsrost abdeckende Vlies ist ferner durch eine perforierte Matte aus einem Kunststoff, insbesondere Polyester bildbar. Es versteht sich, daß anstelle eines Vlieses auch eine Dünnschicht aus einem anderweitig geignetem Werkstoff, beispielsweise ein Gewebe oder ein Filterpapier in Anwendung bringbar ist.

In Abwandlung der Anordnung ist noch vorgesehen, das Rohrstück mit dem Dosierkörper einstückig aus einem saugfähigem porösen Werkstoff zu bilden. Bei dem dieser Art gebildeten Rohrstück und Dosierkörper kann gegebenenfalls auf einen Kernkörper aus einem Werkstoff mit Kapillareigenschaft verzichtet werden. Bevorzugt kann das Rohrstück und Dosierkörper aus einem Tonwerkstoff gebildet sein, dessen eigenständige Saugfähigkeit den Werkstoff aus Kapillarwirkung ersetzt.

Schließlich ist noch vorgesehen, das Rohrstück an dem in dem Topf einragenden Ende mit einer sich unter Zwischenfügung einer Haftschicht auf dem Topfboden dicht abstützenden Haube mit einer Vielzahl Lochungen zu versehen und das Rohrstück und die Haube gemeinsam mit einem Werkstoff mit Kapillarwirkung auszufüllen. Bei der dieser Art gebildeten Anordnung tritt unter Fortfall des Dosierkörpers über die Lochungen Flüssigkeit unmittelbar aus dem Werkstoff mit Kapillarwirkung an die Pflanzenerde über. Gegebenenfalls sich einstellende Übermengen an Wasser gelangen über das Vlies in die zwischen Pflanzenerde und Topfboden befindliche Kammer und dort wie angegeben über das Belüftungsrohr ins Freie.

Es besteht außerdem die Möglichkeit, das Rohrstück über eine Seitenwandöffnung in den Topf einzuführen und dabei das in den Topf eingeführte Rohrstückende mit einer Aufnahmeschale für einen in dieser einstellbaren Dosierkörper für Wasser zu versehen. Das Rohrstück nimmt einen bis zum Dosierkörper sich erstreckenden Kernkörper aus einem Werkstoff mit Kapillareigenschaft auf. Letztlich kann der Topf Griffmulden aufweisen, die einmal ein leichtes Erfassen des Topfes ohne Eingreifen in Pflanzenerde ermöglichen und zum anderen als Füllöffnungen für Wasser dienen.

Es entspricht dem Wesen der Erfindung, daß die Form und Größe des die Pflanzenerde aufnehmenden Topfes und die Gestaltung und Größe des Übertopfes für die Funktion der Anordnung unerheblich sind. Sie ist weiter in Topfkombinationen in Wintergärten und Pflanzenhäusern anwendbar. Eine Luftbefeuchtung läßt sich mittels der Anordnung noch erzielen. Außerdem ist die Anordnung unabhängig der Höhe des Wasserspiegels im Übertopf funktionsfähig.

Wie die Erfindung ausgeführt sein kann zeigen mit den für diese wesentlichen Merkmalen die in der Zeichnung dargestellten Ausführungsbeispiele. Hierin bedeuten:

Fig. 1 eine Anordnung im Schnitt,

Fig. 2 eine Anordnung in Draufsicht,

Fig. 3 einen Teilschnitt einer Anordnung anderer Ausführung,

Fig. 4 ein Teilstück, teilweise im Schnitt gemäß einer weiteren Ausführung,

Fig. 5 einen Teilschnitt eines Topfs, vergrößert,

Fig. 6 einen Schnitt nach der Linie VI-VI der Fig. 5,

Fig. 7 einen weiteren Teilschnitt eines Topfs, vergrößert,

Fig. 8 einen Schnitt nach der Linie VIII-VIII der Fig. 7,

Fig. 9 ein Teilstück eines Gitters perspektivisch und

Fig.10 eine abgewandelte Anordnung im Schnitt, verkleinert.

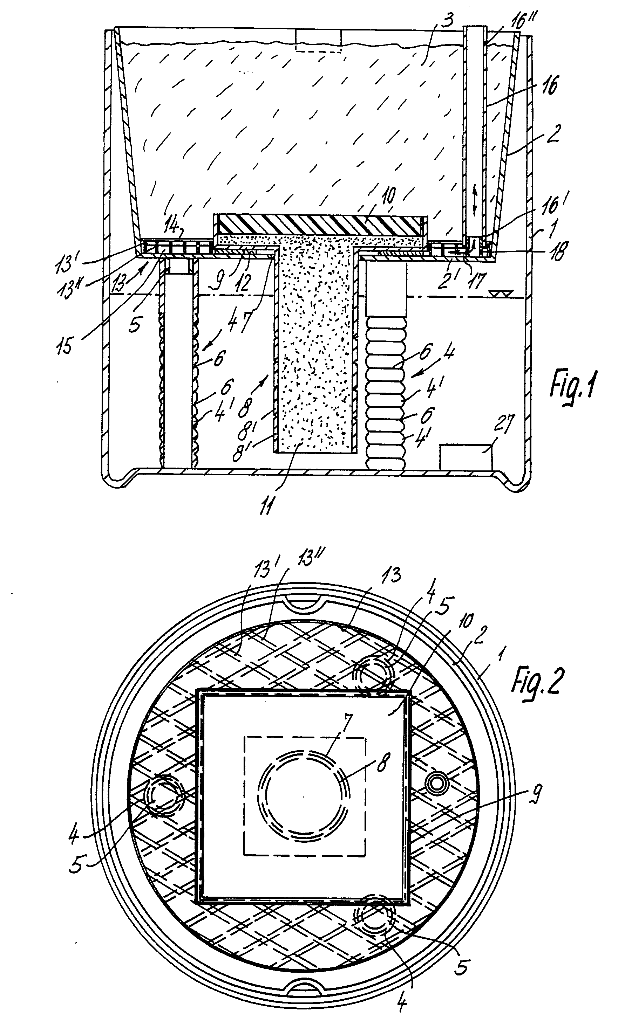

In den Fig. ist mit 1 ein Übertopf beliebiger Größe und Form bezeichnet, der aus einem wasserdichten Werkstoff gefertigt ist und der Bevorratung von Wasser dient. Mit 2 ist ein Topf zur Aufnahme von Pflanzenerde 3 bezeichnet, der in den Übertopf 1 mittels Rohrstücken 4, gestützt aufstellbar ist. Die Rohrstücke 4 sind in Fig. 1 und 2 auf topffeste Zapfen 5 reibschlüssig aufgeschoben und weisen über einen Teil ihrer Länge vorbereitete Sollbruchstellen 6 auf. An den Sollbruchstellen 6 sind Rohrstückabschnitte 4' zu Änderungen der Aufstellhöhe des Topfes 2 im Übertopf 1 abbrechbar. Als Werkstoff für die Rohrstücke 4 kann ein Kunststoff dienen. Durch eine Mittelöffnung 7 (Fig. 1) des Topfbodens 2' ist ein weiteres Rohrstück 8 mit Sollbruchstellen 6 in den Topf 2 mit einer Teillänge eingeführt, das am unteren Ende permanent offen ist und an dem im Topf eintauchenden Ende zu einer Aufnahmeschale 9 verbreitert ist. Die Aufnahmeschale 9 kann beliebige, bevorzugt quadratische Querschnittsform aufweisen und dient der Aufnahme eines Dosier körpers 10 für abzugebendes Wasser. Der Dosierkörper 10 ist aus einem Tonwerkstoff, also porösem Werkstoff gefertigt. Das Rohrstück 8 nimmt einen Kernkörper 11 aus einem Werkstoff mit Kapillareigenschaft, bevorzugt einen wassersaugenden Schaum, insbesondere Hartschaum auf, der sich bis zum Dosierkörper 10 erstreckt. Hierdurch kann Wasser aus dem Übertopf 1 über den Kernkörper 11 bis unterhalb des Dosierkörpers 10 gelangen und von diesem abgenommen werden, um dann weiter vom Dosierkörper an die Pflanzenerde zur Befeuchtung derselben abgegeben zu werden. Die Aufnahmeschale 9 stützt sich mittels einer streifenförmigen Haftdichtung 12 auf den Topfboden 2' ab. Die Haftdichtung 12 verbindet vermittels einer zusätzlich vorgesehenen Klebeschicht die Aufnahmeschale 9 mit dem Topfboden 2'. Die Aufnahmeschale 9 ist durch einen Lüftungsrost 13 umgeben, der bevorzugt durch ein Gitter (Fig. 9) mit verschieden hohen Stegen 13', 13" gebildet ist. Der Lüftungsrost 13 ist durch ein Vlies 14 übergriffen, das die Bildung einer Lüftungskammer 15 im Bereich desLüftungsrostes 13 (Fig. 5) ermöglicht und ein Eindringen von Pflanzenerde in die Lüftungskammer 15 verhindert. Mit der Lüftungskammer 15 steht ein Lüftungsrohr 16 in Verbindung, dessen kammerseitiges Ende 16'auf einen mit Queröffnungen 17 versehenen bodenfesten Ansatz 18 aufgesteckt ist, während das freie Ende 16" desselben oberhalb der Pflanzenerde 3 ausmündet. Über das Lüftungsrohr 16 ist ein Luftaustausch zwischen Lüftungskammer 15 und dem Raum möglich, wobei über das Vlies 14 überschüssiges Wasser in die Lüftungskammer 15 gelangen kann, das dann über das Lüftungsrohr 16 ausgetragen wird. Hierdurch wird eine Übersäuerung der Pflanzenerde durch übermässige Befeuchtung ausgeschlossen. Im Randbereich des Topfs 2 sind Griffmulden 19 (Fig. 7) angeordnet, die ein leichtes Erfassen des Topfes 2 ermöglichen und mit Durchgriffsöffnungen 20 Füllöffnungen für Wasser bilden.

Beim Ausführungsbeispiel der Fig. 7 ist das freie Ende 16″ des Lüftungsrohres 16 durch eine aufgesteckte Lüftungspfeife 21 mit Schlitzungen 22 übergriffen, die wiederum durch eine Kappe 23 abdeckbar ist. Die Schlitzungen 22 verhindern den Übertritt von Erdreich in das Lüftungsrohr 16, wodurch eine sichere Lüftung auch bei längerer Benutzungsdauer erhalten bleibt.

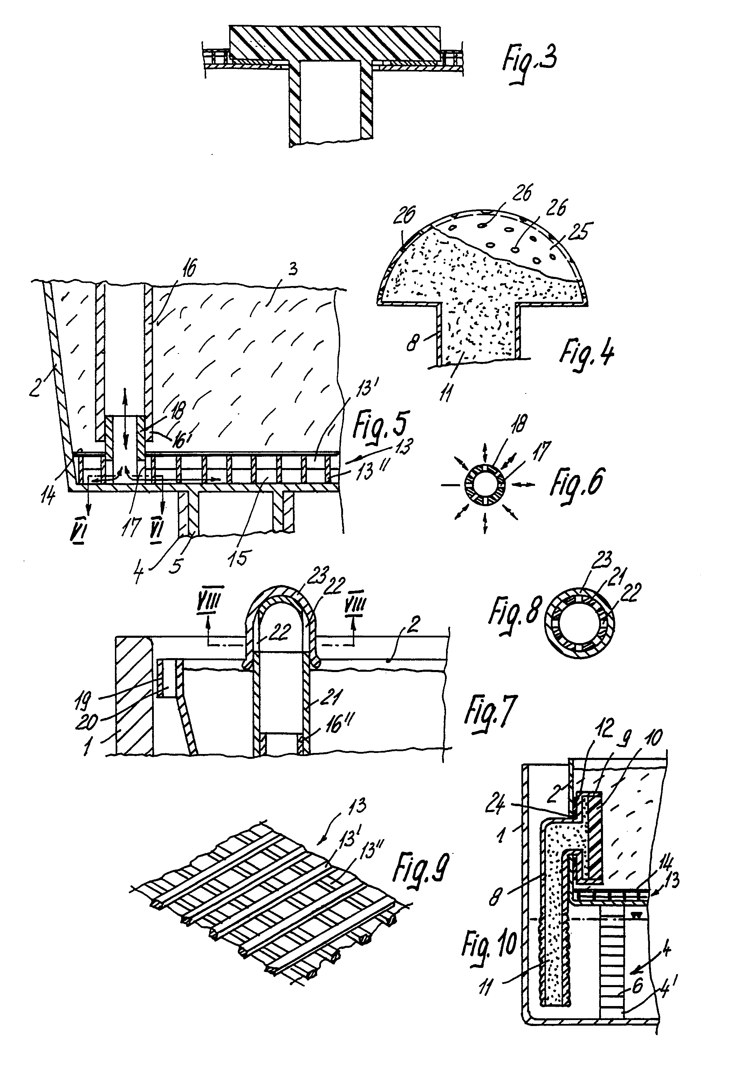

Beim Ausführungsbeispiel der Fig. 10 ist das Rohrstück 8 über eine Seitenwandöffnung 24 in den Topf 2 eingeführt und mit einer Aufnahmeschale 9 für einen Dosierkörper 10 versehen. Das Rohrstück 8 nimmt einen Kernkörper 11 auf, der den Übertritt von Wasser aus dem Übertopf 1 an den Dosierkörper 10 vermittels Saugwirkung ermöglicht. Der Kernkörper 11 kann durch Ausschäumen des Rohrstücks 8 gebildet sein.

Beim Ausführungsbeispiel der Fig. 4 findet ein Rohrstück 8 Anwendung dessen in den Topf eintauchendes Ende eine Haube 25 bildet. Das Rohrstück 8 und die Haube 25 sind durch einen einstückigen Kunststofformteil gebildet, der einen gemeinsamen Kernkörper 11 mit Kapillarwirkung aufnimmt. Über den Kernkörper 11 erfolgt die Ansaugung von Wasser, das nachfolgend über eine Anzahl Lochungen 26 in der Haube 25 an die Pflanzenerde übertritt. Im übrigen ist das Rohrstück 8 mit Haube 25, wie in Fig. 1 dargestellt, durch eine Haftdichtung 12 mit dem Topf 2 zu verbinden.

Es versteht sich, daß die Kernkörper 11 auch aus einem Schwammwerkstoff oder einem anderweitigen saugfähigen Werkstoff, z.B. Papierwerkstoff gebildet sein kann.

Beim Ausführungsbeispiel der Fig. 3 ist das Rohrstück 8 und der Dosierkörper 10 einstückig aus einem porösem Werkstoff, z.B. einem Ton-Werkstoff gebildet. Über das Rohrstück 8 gelangt durch Saugwirkung unter Ausschluß eines porösen Kernkörpers Wasser in den Dosierkörper 10 und wird von diesem an die Pflanzenerde abgegeben.

Mit 27 ist ein vom Boden des Übertopfes 1 im Vorratswasser befindlicher Düngekörper bezeichnet.

## Ansprüche

1. Anordnung zum Anfeuchten von Pflanzenerde in Töpfen, dadurch gekennzeichnet, daß der Topf (2) in einem mindestens teilweise mit Wasser gefüllten Übertopf (1) frei einstellbar ist und ein eine Bodenöffnung (7) des Topfs (2) dicht durchgreifendes Rohrstück (8) aufweist, das an dem dem Topf (2) abgewandten Ende eine permanent offene Zuflußöffnung für Wasser und an dem im Topf (2) sich erstreckenden Ende eine angeformte Aufnahmeschale (9) für einen die Pflanzenerde (3)-kontaktierenden Dosierkörper (10) für Wasser aufweist und mit einem zu einer Auflage für den Dosierkörper (10) in der Aufnahmeschale (9) verbreiterten gemeinsamen Kernkörper(11) aus einem Werkstoff mit Kapillareigenschaft ausgefüllt ist.

2. Anordnung nach Anspruch 1, dadurch gekennzeichnet, daß der Topf (2) mittels am Boden (2′) außen lösbar fest angeordneten Rohrstücken (4) im Übertopf (1) aufstellbar ist.

3. Anordnung nach Anspruch 2, dadurch gekennzeichnet, daß die Rohrstücke (4) axial im Abstand übereinander eine Anzahl vorbereitete Sollbruchstellen (6) aufweisen und daß zu Längenänderungen der Rohrstücke (4) an den Sollbruchstellen (6) Rohrstückabschnitte (4′) abbrechbar sind.

4. Anordnung nach Anspruch 1, dadurch gekennzeichnet, daß das die Bodenöffnung (7) des Topfs (2) durchgreifende Rohrstück (8) axial im Abstand übereinander eine Anzahl vorbereitete Sollbruchstellen (6) aufweist und daß zu Längenänderungen des Rohrstücks (8) an den SollBruchstellen (6) Rohrstückabschnitte (8′) abbrechbar sind.

5. Anordnung nach Anspruch 1, dadurch gekennzeichnet, daß das Rohrstück(8) eine Bodenöffnung (7) des Topfs (2) mit seitlichem Spiel durchgreift und durch eine zwischen Aufnahmeschale (10) und Topfboden (2′) angeordnete Haftschicht (12) mit dem Topf (2) fest und dicht verbunden ist.

6. Anordnung nach Anspruch 5, dadurch gekennzeichnet, daß die Haftschicht (12)durch ein klebendes Dichtungsband gebildet ist.

7. Anordnung nach Anspruch 6, dadurch gekennzeichnet, daß das Dichtungsband durch eine auf beiden Seiten eine vorbereitete Klebeschicht aufweisende Kunststoffolie oder eines Papierformteils gebildet ist.

8. Anordnung nach Anspruch 1, dadurch gekennzeichnet, daß die Aufnahmeschale (9) durch einen sich auf dem Topfboden (2′) innen abstützenden Lüftungsrost (13) umfaßt ist, der durch ein mit der Pflanzenerde (3) kontaktierendes Vlies (14) übergriffen ist und daß die zwischen Topfboden (2′) und Vlies (14) durch den Lüftungsrost (13) gebildete Kammer mit einem bis über die Oberseite der Pflanzenerde (3) sich erstreckenden Lüftungsrohr (16) verbunden ist.

9. Anordnung nach Anspruch 8, dadurch gekennzeichnet, daß das Lüftungsrohr (16) auf einen mit Queröffnungen (17) versehenen topffesten Ansatz (18) lösbar aufsteckbar ist.

10. Anordnung nach Anspruch 8 und 9, dadurch gekennzeichnet, daß das freie Ende (16″) des Lüftungsrohres (16) eine Queröffnungen (22) aufweisende aufgesteckte Lüftungspfeife (21) trägt.

11. Anordnung nach Anspruch 8, 9 und 10, dadurch gekennzeichnet, daß das freie Ende (16″) des Lüftungsrohres (16) oder die Lüftungspfeife (21) durch eine lösbar aufgesteckte Haube (23) abdeckbar ist.

12. Anordnung nach Anspruch 8, dadurch gekennzeichnet, daß der Lüftungsrost (13) durch ein Gitter mit verschieden großen Stegen (13', 13") gebildet ist.

13. Anordnung nach Anspruch 8, dadurch gekennzeichnet, daß der Lüftungsrost (13) durch ein Gewebe gebildet ist.

14. Anordnung nach Anspruch 8, dadurch gekennzeichnet, daß das Vlies (14) durch eine perforierte Matte aus Polyester gebildet ist.

15. Anordnung nach Anspruch 1, dadurch gekennzeichnet, daß das Rohrstück (8) und der Dosierkörper (10) einstückig aus einem saugfähigen porösem Werkstoff gebildet sind. (Fig. 3).

16. Anordnung nach Anspruch 15, dadurch gekennzeichnet, daß Rohrstück (8) und Dosierkörper (10) aus einem Ton-Werkstoff gebildet sind (Fig. 3).

17. Anordnung nach Anspruch 1, dadurch gekennzeichnet, daß das Rohrstück (8) an dem in den Topf (2) einragenden Ende eine sich unter Zwischenfügung einer Haftschicht (12) auf den Topfboden (2') dicht abstützenden Haube (25) mit einer Anzahl Lochungen (26) aufweist und daß das Rohrstück (8) und die Haube (25) gemeinsam durch einen Kernkörper aus einem WErkstoff mit Kapillarwirkung ausgefüllt sind (Fig. 4).

18. Anordnung nach Anspruch 1, dadurch gekennzeichnet, daß das Rohrstück (8) über eine Seitenwandöffnung (24) in den Topf (2)dicht eintaucht und das eintauchende Rohrstückende eine Aufnahmeschale (9) mit einem in dieser eingestellten Dosierkörper (10) für Wasser trägt (Fig. 10).

19. Anordnung nach Anspruch 1, dadurch gekennzeichnet, daß der Topf (2) Griffmulden (19) aufweist, die als Füllöffnungen für Wasser ausgebildet sind.

20. Anordnung nach Anspruch 1, dadurch gekennzeichnet, daß der Topf (2) außen Stützfüße aufweist.

0 290 755

Fig.1

Fig.2

0 290 755

Fig.3

Fig.4

Fig.5

Fig.6

Fig.7

Fig.8

Fig.9

Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 440 616 (BLATTERT) <br> * Seite 11, letzter Absatz - Seite 15, letzter Absatz; Figuren 1-6 * | 1,15,16,20 | A 01 G 27/00 |
| A | | 8,12 | |
| Y | DE-C- 54 894 (SCHULZ) <br> * Insgesamt * | 1,15,16,20 | |
| Y | CH-A- 308 827 (HERMANN PETER) <br> * Insgesamt * | 1,15,16 | |
| A | FR-A-1 566 567 (GROSFILLEX) <br> * Insgesamt * | 8 | |
| A | AU-B- 538 711 (DAVID ROSS WIG) <br> * Seite 6, Zeile 1 - Seite 7, Zeile 12; Figur 1 * | 1 | |
| A | CH-A- 347 380 (WULLSCHLEGER) <br> * Insgesamt * | 1,15 | |
| A | CH-A- 466 630 (ALTORFER) <br> * Insgesamt * <br> ----- | 1,18 | RECHERCHIERTE SACHGEBIETE (Int. Cl.4) <br><br> A 01 G |

Der vorliegende Recherchenbericht wurde für alle Patentansprüche erstellt

| Recherchenort | Abschlußdatum der Recherche | Prüfer |
|---|---|---|
| DEN HAAG | 14-06-1988 | HERYGERS J.J. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
   Dokument

EPO FORM 1503 03.82 (P0403)